# EUROPÄISCHE PATENTANMELDUNG

(11) **EP 4 636 971 A1**
(43) Veröffentlichungstag der Anmeldung: **22.10.2025**
(21) Anmeldenummer: 24170795.9
(22) Anmeldetag: 17.04.2024
(51) Int. Cl.: H02J 3/00, H02M 1/00, H02M 7/42, H02M 7/48

(54) **VERFAHREN ZUM BETREIBEN EINES WECHSELRICHTERS, VERFAHREN ZUR ENERGIEVERSORGUNG EINES LOKALEN ENERGIEVERSORGUNGSNETZES SOWIE WECHSELRICHTER**

(71) Anmelder: FRONIUS INTERNATIONAL GmbH, 4643 Pettenbach (AT)
(72) Erfinder: KREUZER, Harald, 4643 Pettenbach (AT); WIESER, Stefan, 4643 Pettenbach (AT); ANGERER, Christian, 4643 Pettenbach (AT)
(74) Vertreter: SONN Patentanwälte GmbH & Co KG

(57) **Zusammenfassung**

Die Erfindung betrifft ein Verfahren zum Betreiben eines Wechselrichters (1) im Inselbetrieb, wobei der Wechselrichter (1) zumindest zwei Ausgänge (8a-c) zum Anschluss von elektrischen Außenleitern (L₁, L₂, L₃) besitzt und das Verfahren folgende Schritte aufweist:
i) Ausgeben insbesondere zueinander phasenversetzter Wechselspannungen (U₁, U₂, U₃) an Ausgängen (8a-c), die aktiviert wurden, wobei jedem der zumindest zwei Ausgänge (8a-c) eine Prioritätsstufe (A, B, C) zugeordnet ist;
ii) Überprüfen des Wechselrichters (1) hinsichtlich einer elektrischen Überlastung;
iii) Deaktivieren jenes Ausgangs (8a-c) mit der geringsten Prioritätsstufe (A, B, C), an dem eine Wechselspannung (U₁, U₂, U₃) ausgegeben wird, durch Beenden der Ausgabe der Wechselspannung (U₁, U₂, U₃) an diesem Ausgang (8a-c), wenn eine Überlastung des Wechselrichters (1) festgestellt wurde.

Des Weiteren betrifft die Erfindung ein Verfahren zur Energieversorgung eines lokalen Energieversorgungsnetzes (2) sowie einen Wechselrichter (1).

## Beschreibung

Die Erfindung betrifft ein Verfahren zum Betreiben eines Wechselrichters im Inselbetrieb, wobei der Wechselrichter zumindest zwei Ausgänge zum Anschluss von elektrischen Außenleitern besitzt.

Des Weiteren betrifft die Erfindung ein Verfahren zur Energieversorgung eines lokalen Energieversorgungsnetzes.

Darüber hinaus betrifft die Erfindung einen Wechselrichter, vorzugsweise einen Wechselrichter für eine Photovoltaikanlage, mit zumindest zwei Ausgängen zum Anschluss von elektrischen Außenleitern und einer Steuer- und/oder Regelungseinrichtung.

Im Falle eines Stromausfalls können Wechselrichter im Inselbetrieb eingesetzt werden, um lokale Energieversorgungsnetze, wie beispielsweise Gebäudeenergieversorgungsnetze, mit elektrischer Energie zu versorgen. Die Wechselrichter können zu diesem Zweck beispielsweise mit einem elektrischen Energiespeicher und/oder einer elektrische Energieversorgungseinrichtung, wie zum Beispiel einer Photovoltaikanlage, verbunden sein. Dadurch können an das lokale Energieversorgungsnetz angeschlossene Verbraucher wie Kühlschränke, Beleuchtungsmittel oder Heizungen auch im Falle eines Stromausfalles zumindest für einige Zeit, im Idealfall bis zur Behebung der Ursache für den Stromausfall, betrieben werden. Wenn allerdings die benötigte elektrische Leistung der Verbraucher die zur Verfügung stehende elektrische Leistung übersteigt (Überlastung), müssen die Wechselrichter ihren Betrieb einstellen. Folglich werden auch essentielle Verbraucher nicht mit elektrischer Energie versorgt. Es wäre jedoch wünschenswert, bestimmte Verbraucher auch im Falle einer Überlastung eines Wechselrichters weiterbetreiben zu können.

Aus dem Stand der Technik ist bekannt, Verbraucher, die an ein lokales Energieversorgungsnetz angeschlossen sind, zu priorisieren und, in Abhängigkeit der Priorisierung, zu deaktivieren, wenn eine Überlastung des Wechselrichters vorliegt oder ein Energiedefizit herrscht. Eine solche Vorgehensweise ist beispielsweise bei den Notstromversorgungssystemen, die in EP 2 728 707 A2, DE 10 2019 112 270 A1 und DE 11 2010 005 914 T5 beschrieben werden, bekannt. Um die Deaktivierung einzelner Verbraucher in Abhängigkeit ihrer Priorisierung vornehmen zu können, sind jedoch eine zentrale Steuerungseinheit sowie verteilte Steuerungseinheiten erforderlich, die in den Verbrauchern integriert sind. Darüber hinaus ist eine Kommunikationsverbindung zu den Verbrauchern erforderlich.

Im Lichte dieser Ausführungen ist es Aufgabe der vorliegenden Erfindung, die Nachteile des Standes der Technik zu lindern oder gar gänzlich zu beseitigen. Vorzugsweise ist es Aufgabe der vorliegenden Erfindung, ein Verfahren und einen Wechselrichter der eingangs erwähnten Art zur Verfügung zu stellen, die bei einer Überlastung des Wechselrichters den Betrieb zumindest teilweise aufrechterhalten und auf einfache Weise bestimmte Verbraucher weiterhin mit elektrischer Energie versorgen können. Ganz besonders bevorzugt soll dabei eine Kommunikationsverbindung mit den Verbrauchern nicht erforderlich sein.

Gelöst wird diese Aufgabe durch ein Verfahren zum Betreiben eines Wechselrichters im Inselbetrieb nach Anspruch 1, ein Verfahren zur Energieversorgung eines lokalen Energieversorgungsnetzes nach Anspruch 14 sowie durch einen Wechselrichter nach Anspruch 15.

Erfindungsgemäß sind bei einem Verfahren zum Betreiben eines Wechselrichters im Inselbetrieb der eingangs erwähnten Art folgende Schritte vorgesehen:
Ausgeben insbesondere zueinander phasenversetzter Wechselspannungen an Ausgängen, die aktiviert wurden, wobei jedem der zumindest zwei Ausgänge eine Prioritätsstufe zugeordnet ist;
ii) Überprüfen des Wechselrichters hinsichtlich einer elektrischen Überlastung;
iii) Deaktivieren jenes Ausgangs mit der geringsten Prioritätsstufe, an dem eine Wechselspannung ausgegeben wird, durch Beenden der Ausgabe der Wechselspannung an dem Ausgang, wenn eine Überlastung des Wechselrichters festgestellt wurde.

Vorteilhafterweise können mit dem erfindungsgemäßen Verfahren Verbraucher, die mit einem höher priorisierten Ausgang des Wechselrichters verbunden sind, weiter mit elektrischer Energie versorgt werden, wenn eine elektrische Überlastung des Wechselrichters oder einer mit dem Wechselrichter verbundenen Versorgungseinrichtung, beispielsweise einem elektrischen Energiespeicher oder einer Energieerzeugungseinrichtung, vorliegt. Zugleich kann durch Deaktivierung des Ausgangs mit der geringsten Prioritätsstufe, an dem eine Wechselspannung ausgegeben wird, in vielen Fällen die Überlastung des Wechselrichters beseitigt werden, sodass an den aktivierten Ausgängen Wechselspannungen und elektrische Ströme in vorgegebener Höhe, d.h. gemäß einem Sollwert, ausgegeben werden können. Deaktivieren eines Ausgangs bedeutet dabei, dass keine Wechselspannung an dem deaktivierten Ausgang durch den Wechselrichter ausgegeben wird. Vorzugsweise werden deaktivierte Ausgänge, wie weiter unten noch beschrieben wird, in einen hochohmigen Zustand geschaltet. Das Verfahren, insbesondere die Schritte i), ii) und/oder iii), kann iterativ ausgeführt werden, sodass laufend Wechselspannungen an aktivierten Ausgängen ausgegeben werden und auch weitere Ausgänge deaktiviert werden können, wenn trotz Deaktivierung jenes Ausgangs mit der geringsten Prioritätsstufe, an dem eine Wechselspannung ausgegeben wird, weiterhin eine elektrische Überlastung vorliegt. Die iterative Ausführung der Schritte ii) und iii) kann bei hoher elektrischer Überlastung auch dazu führen, dass sämtliche Ausgänge des Wechselrichters deaktiviert werden, sodass an keinem der Ausgänge eine elektrische Wechselspannung mehr ausgegeben wird. Eine elektrische Überlastung kann insbesondere dadurch entstehen, dass die an das lokale Energieversorgungsnetz angeschlossenen Verbraucher mehr elektrische Leistung bzw. elektrische Energie benötigen, als der Wechselrichter, ein mit dem Wechselrichter verbundener elektrischer Energiespeicher und/oder eine elektrische Energieerzeugungseinrichtung zur Verfügung stellen können. Die Schritte i), ii) und/oder iii) können zumindest teilweise oder gänzlich überlappend ausgeführt werden. Jedenfalls gibt die Benennung der Schritte nicht zwangsläufig deren Reihenfolge in der Ausführung vor. Ausgänge des Wechselrichters können insbesondere durch Ausgeben einer Wechselspannung aktiviert werden. Im Inselbetrieb speist der Wechselrichter in das lokale Energieversorgungsnetz ein, ohne dass das lokale Energieversorgungsnetz von einem übergeordneten öffentlichen Energieversorgungsnetz versorgt wird. Mit anderen Worten wird das lokale Energieversorgungsnetz ausschließlich durch zumindest einen, bei einer Ausführungsvariante mehrere, Wechselrichter versorgt. Der Wechselrichter ist somit im Inselbetrieb nicht durch eine Spannung und/oder einen Strom in dem lokalen Energieversorgungsnetz geführt. Bei einer bevorzugten Ausführungsform ist das lokale Energieversorgungsnetz im Inselbetrieb von dem übergeordneten öffentlichen Energieversorgungsnetz durch einen Trennschalter getrennt. Der Wechselrichter ist dazu eingerichtet, eine Gleichspannung in eine Wechselspannung an den Ausgängen umzuwandeln. Zu diesem Zweck kann der Wechselrichter einen Gleichspannungszwischenkreis, welcher einen oder mehrere Kondensatoren besitzen kann, und elektrische Schalter, die durch ein Schaltmuster angesteuert werden können, aufweisen. Der Wechselrichter weist zumindest zwei, vorzugsweise zumindest drei, insbesondere exakt drei Ausgänge zur Verbindung mit Außenleitern eines lokalen Energieversorgungsnetzes auf und ist dazu eingerichtet, an den Ausgängen insbesondere zueinander phasenversetzte Wechselspannungen auszugeben. Die Wechselspannungen sind vorzugsweise um 360/n° zueinander versetzt, wobei n die Anzahl der Ausgänge des Wechselrichters darstellt. Bevorzugt ist die Anzahl der Ausgänge n=3. An die zumindest zwei Ausgänge des Wechselrichters können jeweils ein Außenleiter, d.h. Phasen, des lokalen Energieversorgungsnetzes angeschlossen werden. Die Höhe der ausgegebenen Wechselspannung beträgt vorzugsweise im Wesentlichen 230 V und weist eine Frequenz von vorzugsweise im Wesentlichen 50 Hz auf. Der Wechselrichter kann zudem einen Anschluss zur Verbindung mit einem Neutralleiter des lokalen Energieversorgungsnetzes aufweisen. Jedem der zumindest zwei Ausgänge des Wechselrichters ist eine Prioritätsstufe zugeordnet. Die Prioritätsstufen können eine aufsteigende Reihenfolge aufweisen und somit eine eindeutige Rangordnung vorgeben. Die Prioritätsstufen können beispielsweise in Form von natürlichen Zahlen oder Buchstaben vorliegen. Die Zahl der möglichen Prioritätsstufen entspricht der Zahl der Ausgänge des Wechselrichters. Vorzugsweise liegt jede Prioritätsstufe nur exakt einmal vor. Somit kann bei einer Ausführungsform der Erfindung jedem Ausgang eine unterschiedliche Prioritätsstufe zugeordnet werden, sodass die zumindest zwei Ausgänge und dadurch die angeschlossenen Außenleiter des lokalen Energieversorgungsnetzes unterschiedlich priorisiert sind. Um die Außenleiter des lokalen Energieversorgungsnetzes zu priorisieren, können diese an einen Ausgang mit einer bereits zugeordneten Prioritätsstufe verbunden werden oder die Prioritätsstufe der Ausgänge nach dem Verbinden mit den Außenleitern eingestellt werden. Im ersten Fall ist es auch möglich, dass die Prioritätsstufen den Ausgängen fest, d.h. unveränderlich, zugeordnet sind. Über die zumindest zwei Ausgänge kann der Wechselrichter mit dem lokalen Energieversorgungsnetz, an welches wiederum die Verbraucher angeschlossen sind, verbunden sein. In Schritt i) werden Wechselspannungen an Ausgängen ausgegeben, die aktiviert wurden. Vorzugsweise werden zu Beginn des Verfahrens sämtliche der zumindest zwei Ausgänge des Wechselrichters insbesondere im Wesentlichen gleichzeitig aktiviert, sodass an allen der zumindest zwei Ausgängen eine Wechselspannung ausgegeben wird. Es ist aber auch möglich, die Ausgänge zu Beginn des Verfahrens sukzessive mit zeitlichen Abständen zu aktivieren. Die Überprüfung des Wechselrichters hinsichtlich einer elektrischen Überlastung in Schritt ii) kann beispielsweise durch eine Ausgangsspannungsmessung an den zumindest zwei Ausgängen oder durch eine Zwischenkreisspannungsmessung eines Zwischenkreises des Wechselrichters erfolgen, wie weiter unten noch näher beschrieben wird. Auch eine Messung der Ausgangsströme ist möglich. In Schritt iii) wird der Ausgang mit der geringsten Prioritätsstufe, an dem eine Wechselspannung ausgegeben wird, deaktiviert. Dadurch werden Verbraucher, die mit dem deaktivierten Ausgang des Wechselrichters verbunden sind, nicht mehr mit elektrischer Energie versorgt und somit die elektrische Belastung verringert, was in vielen Fällen zu einer Beseitigung der Überlastung des Wechselrichters führen kann. Jene Ausgänge mit einer höheren Prioritätsstufe, an denen weiterhin eine Wechselspannung ausgegeben wird, bleiben aktiviert, sofern nicht bei einer erneuten Iteration des Verfahrens weiterhin eine elektrische Überlastung festgestellt und erneut jener Ausgang mit der geringsten Prioritätsstufe, an dem eine Wechselspannung ausgegeben wird, deaktiviert wird. Durch die Priorisierung der Ausgänge des Wechselrichters erfolgt eine Priorisierung der Außenleiter eines angeschlossenen lokalen

Energieversorgungsnetzes und damit der Verbraucher. Weniger wichtige Verbraucher können an einen gemeinsamen Außenleiter angeschlossen sein, der mit einem Ausgang verbunden ist, dem eine geringe oder die geringste Prioritätsstufe zugeordnet ist. Essentielle Verbraucher können an einen gemeinsamen Außenleiter angeschlossen sein, der mit einem Ausgang verbunden ist, dem eine hohe oder die höchste Prioritätsstufe zugeordnet ist. Durch Anschließen der Verbraucher an derart priorisierte Außenleiter bzw. Verbinden der Außenleiter mit priorisierten Ausgängen werden weniger wichtige Verbraucher im Falle einer elektrischen Überlastung zuerst abgeschaltet. Essentielle Verbraucher, wie beispielsweise Kühlschränke und bestimmte Lampen, können weiter mit elektrischer Energie versorgt werden. Bei dem Wechselrichter kann es sich beispielsweise um einen Insel-Wechselrichter oder einen Hybrid-Wechselrichter handeln. Bei einer Ausführungsform der Erfindung kann vorgesehen sein, dass vor der Deaktivierung eines Ausgangs in Schritt iii) der Sollwert für die Zwischenkreisspannung oder die Ausgangsspannungen an den aktivierten Ausgängen reduziert wird, zum Beispiel auf 90 %. In manchen Fällen lässt sich dadurch die Überlastung bereits beseitigen, sodass es zu keiner Deaktivierung eines Ausganges kommen muss. Wird also eine Überlastung festgestellt, wird zunächst der Sollwert für die Zwischenkreisspannung und/oder die Ausgangsspannungen reduziert. Nur wenn die Überlastung weiterhin besteht, wird bei dieser Ausführungsform der Ausgang mit der geringsten Prioritätsstufe, an dem eine Wechselspannung ausgegeben wird, deaktiviert. Bevorzugt ist der Wechselrichter als dreiphasiger Wechselrichter mit drei Ausgängen, jeweils zum Anschluss eines Außenleiters, ausgebildet. Bei einer Ausführungsform der Erfindung kann der Ausgang mit der höchsten Prioritätsstufe unter den deaktivierten Ausgängen nach einer vorgegebenen Zeitdauer erneut aktiviert werden. Wenn daraufhin erneut eine elektrische Überlastung durch Vergleich der elektrischen Größe mit dem Schwellwert festgestellt wird, kann der Ausgang erneut in Schritt iii) deaktiviert werden.

Bei einer Ausführungsform der Erfindung ist vorgesehen, dass die Schritte i), ii) und iii) laufend wiederholt werden. Die Schritte i), ii) und iii) können dabei zumindest teilweise zeitlich parallel ausgeführt werden. Durch die laufende Überprüfung des Wechselrichters hinsichtlich einer elektrischen Überlastung erfolgt eine Überwachung des Wechselrichters bzw. einer allfällig angeschlossenen Versorgungseinrichtung. Die Schritte ii) und iii) können beispielsweise in regelmäßigen zeitlichen Abständen, beispielsweise mit einer Frequenz zwischen 1 Hz und 100 Hz, insbesondere zwischen 5 Hz und 70 Hz oder zwischen 10 Hz und 60 Hz, ausgeführt werden. Die Schritte i), ii) und iii) können während des gesamten Betriebs des Wechselrichters laufend wiederholt werden. Bei einer Ausführungsform der Erfindung können die Schritte i), ii) und iii) so lange wiederholt bzw. ausgeführt werden und dadurch der Wechselrichter bzw. die Versorgungseinrichtung so lange hinsichtlich einer Überlastung überwacht werden, bis aufgrund einer anhaltenden elektrischen Überlastung an keinem der Ausgänge des elektrischen Wechselrichters mehr eine Wechselspannung ausgegeben wird, d.h. bis der Wechselrichter abgeschaltet wird oder bis das lokale Energieversorgungsnetz wieder mit dem übergeordneten öffentlichen Versorgungsnetz verbunden ist.

Bei einer Ausführungsform der Erfindung ist vorgesehen, dass der Wechselrichter hinsichtlich der elektrischen Überlastung überprüft wird, indem
eine elektrische Größe, insbesondere eine elektrische Spannung oder ein elektrischer Strom, des Wechselrichters erfasst wird und
die elektrische Größe mit einem Schwellwert verglichen wird, und eine Überlastung festgestellt wird, wenn die elektrische Größe den Schwellwert unter- oder überschreitet. Die Erfassung der elektrischen Größe kann durch eine Messeinrichtung, insbesondere eine oder mehrere Spannungs- und/oder Strommesssensoren, erfolgen. Der Schwellwert kann beispielsweise einen vorgegebenen Prozentsatz eines Sollwerts für die elektrische Größe oder eines maximal zulässigen Werts der elektrischen Größe betragen. Beispielsweise kann der Schwellwert zwischen 105 % und 120 %, insbesondere bei im Wesentlichen 110 %, eines Nennstromes liegen. Bei dem Nennstrom kann es sich beispielsweise um einen Ausgangsstrom handeln. Bei einer anderen Ausführungsform kann der Schwellwert beispielsweise zwischen 80 % und 95 %, insbesondere bei im Wesentlichen 90 %, einer Nennspannung liegen. Bei der Nennspannung kann es sich beispielsweise um die Zwischenkreisspannung oder eine Ausgangsspannung an den Ausgängen handeln. Ob zur Überprüfung des Wechselrichters hinsichtlich der elektrischen Überlastung der Schwellwert unter- oder überschritten wird, hängt insbesondere von der Art der elektrischen Größe ab. Die Formulierung "unter- oder überschreitet" impliziert dabei nicht zwangsläufig, dass ein Bereich für die elektrische Größe vorgesehen ist, dessen Unterschreiten und Überschreiten eine Überlastung des Wechselrichters bedeutet. Wenn die elektrische Größe beispielsweise eine elektrische Spannung ist, kann ein Unterschreiten des Schwellwerts eine elektrische Überlastung bedeuten. Wenn die elektrische Größe beispielsweise ein elektrischer Strom ist, kann ein Überschreiten des Schwellwerts eine elektrische Überlastung bedeuten. Bei einer Ausführungsform der Erfindung kann, wie weiter oben bereits beschrieben, vorgesehen sein, dass der Sollwert der Ausgangsspannungen oder der Zwischenkreisspannung reduziert wird, bevor ein Ausgang deaktiviert wird. In diesem Fall kann der Schwellwert der Ausgangsspannungen oder der Zwischenkreisspannung dem reduzierten Sollwert entsprechen.

Bei einer Ausführungsform der Erfindung ist vorgesehen, dass die elektrische Größe
ein elektrischer Strom, insbesondere ein Ausgangsstrom an einem der Ausgänge (8a-c),
eine mit dem elektrischen Strom in Verbindung stehende Größe,
eine elektrische Zwischenkreisspannung eines Zwischenkreises des Wechselrichters,
eine elektrische Ausgangsspannung zumindest eines der Ausgänge des Wechselrichters oder
eine mit der Zwischenkreisspannung und/oder der Ausgangsspannung in Verbindung stehende Größe
   ist.

Wenn die elektrische Größe eine Zwischenkreisspannung eines Zwischenkreises des Wechselrichters ist, kann der Schwellwert beispielsweise im Bereich zwischen 70 % und 98 % eines Sollwerts liegen, wobei der Sollwert der Zwischenkreisspannung vorzugsweise zwischen 300 V und 1200 V, insbesondere zwischen 600 V und 1200 V oder zwischen 650 V und 1000 V, liegt. Die Sollwerte der Zwischenkreisspannung können dabei von den Parametern (zum Beispiel der Spannung oder der Frequenz etc.) des jeweiligen Versorgungsnetzes abhängig sein. Wenn die elektrische Größe eine Ausgangsspannung zumindest eines der Ausgänge des Wechselrichters ist, kann der Schwellwert beispielsweise zwischen 70 % und 98 % eines Sollwerts betragen, wobei der Sollwert der Ausgangsspannung vorzugsweise zwischen 200 V und 260 V, insbesondere im Wesentlichen bei 230 V, liegt. Die angegebenen Spannungen stellen Effektivwerte dar und sind auf ein Neutralleiterpotential bezogen. Besonders günstig ist, wenn die Ausgangsspannungen sämtlicher Ausgänge des Wechselrichters als elektrische Größen erfasst und mit einem Schwellwert verglichen werden, da die Ausgangsspannungen der Ausgänge auch für die Regelung und/oder Steuerung des Wechselrichters herangezogen werden. Bei einer mit dem elektrischen Strom, der Zwischenkreisspannung und/oder der Ausgangsspannung in Verbindung stehenden Größe kann es sich beispielsweise um eine elektrische Leistung handeln.

Bevorzugt ist, wenn eine Zuordnung der Prioritätsstufen zu den zumindest zwei Ausgängen einstellbar ist. Beispielsweise kann vorgesehen sein, dass jedem Ausgang durch einen Benutzer eine Prioritätsstufe zugeordnet werden kann. Die Zuordnung der Prioritätsstufe kann beispielsweise bei der erstmaligen Inbetriebnahme oder im laufenden Betrieb des Wechselrichters vorgenommen oder geändert werden. Vorzugsweise kann die Prioritätsstufe durch eine Eingabeschnittstelle, beispielsweise durch Tasten oder ein Bedienfeld, eingestellt werden. Auch eine Einstellung durch einen Computer über eine Datenschnittstelle kann vorgesehen sein. Bei einer alternativen Ausführungsform der Erfindung kann aber auch vorgesehen sein, dass jedem Ausgang eine vorzugsweise unveränderliche Prioritätsstufe zugeordnet ist und durch Anschließen der Außenleiter des lokalen Energieversorgungsnetzes an die Ausgänge eine Zuordnung der Prioritätsstufen zu den Außenleitern erfolgt.

Vorteilhaft ist, wenn jedem der zumindest zwei Ausgänge des Wechselrichters eine eindeutige Prioritätsstufe, die sich von den Prioritätsstufen der anderen Ausgänge unterscheidet, zugeordnet ist. Dadurch wird definiert, in welcher Reihenfolge die Ausgänge deaktiviert werden, wenn eine Überlastung des Wechselrichters vorliegt.

Bei einer Ausführungsform der Erfindung ist der Wechselrichter an ein lokales Energieversorgungsnetz, insbesondere an ein Gebäudeenergieversorgungsnetz, angeschlossen, wobei der Wechselrichter das lokale Energieversorgungsnetz versorgt. Das Gebäudeenergieversorgungsnetz kann beispielsweise ein Energieversorgungsnetz eines Hauses sein, das mit einer Spannung von vorzugsweise im Wesentlichen 230 V (Effektivwert) betrieben wird. Das lokale Energieversorgungsnetz weist vorzugsweise drei Außenleiter auf, an die jeweils Verbraucher angeschlossen sind. Das lokale Energieversorgungsnetz kann auch einen Neutralleiter aufweisen. Bei einer Ausführungsform der Erfindung können auch mehrere vorzugsweise gleichartige Wechselrichter in das lokale Energieversorgungsnetz einspeisen und das erfindungsgemäße Verfahren ausführen. Vorzugsweise sind dabei jenen Ausgängen der Wechselrichter, die mit den gleichen Außenleitern des lokalen Energieversorgungsnetzes verbunden sind, die jeweils gleichen Prioritätsstufen zugeordnet bzw. die Ausgänge der Wechselrichter in Bezug auf deren Verbindung mit den Außenleitern in der gleichen Reihenfolge priorisiert. Mit anderen Worten werden korrespondierenden Ausgängen der Wechselrichter gleiche Prioritätsstufen zugeordnet. Auf diese Weise werden bei einer elektrischen Überlastung jene Ausgänge der Wechselrichter in Schritt iii) deaktiviert, die mit dem gleichen Außenleiter verbunden sind. Dadurch werden Fehlerkennungen von mehrphasigen Lasten vermieden. Wenn mehrere Wechselrichter in das lokale Energieversorgungsnetz einspeisen, können diese im Master-Slave-Verbund betrieben werden und beispielsweise über eine Datenverbindung kommunizieren. Eine Datenverbindung ist allerdings nicht zwingend erforderlich, insbesondere dann nicht, wenn korrespondierenden Ausgängen der Wechselrichter die gleichen Prioritätsstufen zugeordnet sind.

Bevorzugt ist, wenn das Verfahren folgenden Schritt aufweist:
iv-a) Erneutes Aktivieren des Ausgangs mit der höchsten Prioritätsstufe unter den deaktivierten Ausgängen, wenn die Überlastung, die zur Deaktivierung des besagten Ausgangs geführt hat, nicht mehr vorliegt.

Die Überlastung kann beispielsweise nicht mehr vorliegen, wenn ein Verbraucher von dem lokalen Energieversorgungsnetz getrennt wurde. Der Schritt iv-a) kann wiederholt werden, solange ein oder mehrere Ausgänge deaktiviert sind. Die Aktivierung des Ausgangs kann bei einer Ausführungsform der Erfindung manuell erfolgen. Wie bereits oben erwähnt ist es auch möglich, dass der Ausgang mit der höchsten Prioritätsstufe unter den deaktivierten Ausgängen nach einer vorgegebenen Zeitdauer vorzugsweise für eine oder mehrere Perioden aktiviert wird. Wenn daraufhin erneut eine elektrische Überlastung durch Vergleich der elektrischen Größe mit dem Schwellwert festgestellt wird, kann der Ausgang erneut deaktiviert werden. Die Feststellung, ob eine Überlastung vorliegt, kann, wie oben beschrieben, anhand eines Vergleichs einer elektrischen Größe mit einem Schwellwert erfolgen. Es wird in diesem Zusammenhang auf die obigen Aussagen verwiesen. Die Feststellung, ob die Überlastung weiterhin vorliegt, kann zusätzlich oder alternativ auch beispielsweise durch eine Leistungsberechnung der benötigten Leistung der angeschlossenen Verbraucher erfolgen. Wenn die benötigte Leistung weiterhin zu hoch ist, wird der Ausgang deaktiviert. Die Leistungsberechnung kann auf Basis einer Messung der Ausgangsströme und der Ausgangsspannungen während der Aktivierung des Ausgangs mit der höchsten Prioritätsstufe unter den deaktivierten Ausgängen erfolgen. Die vorgegebene Zeitdauer zur erneuten Aktivierung eines deaktivierten Ausgangs kann beispielsweise zwischen 0,1 Sekunden und 30 Sekunden betragen. Es ist auch möglich, dass mehrere unterschiedliche vorgegebene Zeitdauern vorgesehen sind. Beispielsweise kann die vorgegebene Zeitdauer nach dem ersten Deaktivieren eines betreffenden Ausgangs für eine erste Zeitspanne, welche zum Beispiel 5 Sekunden betragen kann, 0,1 Sekunden betragen. Nach Ablauf der ersten Zeitspanne kann die vorgegebene Zeitdauer verlängert werden und beispielsweise 10 Sekunden betragen, sodass der Ausgang mit der höchsten Prioritätsstufe unter den deaktivierten Ausgängen nach Ablauf der ersten Zeitspanne alle 10 Sekunden erneut aktiviert wird.

Bevorzugt ist, wenn das Verfahren folgenden Schritt aufweist:
iv-b) Erneutes Aktivieren des Ausgangs mit der höchsten Prioritätsstufe unter den deaktivierten Ausgängen, wenn durch Wechselrichter eine höhere elektrische Ausgangsleistung zur Verfügung und/oder mehr elektrische Energie stellen kann, als dies bei Deaktivierung des besagten Ausgangs der Fall war. Beispielsweise kann der Ausgang mit der höchsten Prioritätsstufe unter den deaktivierten Ausgängen aktiviert werden, wenn eine Energieerzeugungseinrichtung, die mit dem Wechselrichter verbunden ist, dem Wechselrichter mehr elektrische Leistung und/oder mehr elektrische Energie zur Verfügung stellt. Dies kann beispielsweise bei einer Photovoltaikanlage der Fall sein, wenn die Sonne in einem günstigeren Winkel zur Photovoltaikanlage steht oder Wolken sich aufgelöst haben, sodass mehr Energie der Sonneneinstrahlung pro Zeiteinheit in elektrische Energie umgewandelt wird. Der Schritt iv-b) kann wiederholt werden, solange ein oder mehrere Ausgänge deaktiviert sind.

An dem lokalen Energieversorgungsnetz können nicht nur einphasige Verbraucher, wie beispielsweise in der Regel Lampen oder Fernsehgeräte, sondern auch mehrphasige Verbraucher, wie beispielsweise ein dreiphasiger Elektromotor, angeschlossen sein. Wenn jedoch einzelne Ausgänge des Wechselrichters und damit einzelne Außenleiter des lokalen Energieversorgungsnetzes deaktiviert werden, kann es zu Beschädigungen von mehrphasigen Verbrauchern kommen. Aus diesem Grund ist bei einer Ausführungsform vorgesehen, dass, wenn eine mehrphasige Last mit zumindest zwei Ausgängen des Wechselrichters elektrisch verbunden ist, sämtliche Ausgänge des Wechselrichters, an denen die mehrphasige Last angeschlossen ist, insbesondere nach Feststellung einer elektrischen Überlastung deaktiviert werden. Bei einer Ausführungsform der Erfindung kann vorgesehen sein, dass ein Benutzer, beispielsweise über eine Taste oder ein Bedienfeld, eingeben kann, dass an das lokale Energieversorgungsnetz eine mehrphasige Last angeschlossen ist und im Falle einer festgestellten Überlastung daher sämtliche Ausgänge des Wechselrichters, an denen die mehrphasige Last angeschlossen ist, deaktiviert werden. Die Deaktivierung findet vorzugsweise statt, nachdem eine Überlastung festgestellt wurde. Bei einer Ausführungsform der Erfindung werden alle Ausgänge des Wechselrichters deaktiviert, wenn eine mehrphasige Last mit dem Wechselrichter verbunden ist. Vorteilhaft ist, wenn die mehrphasige Last durch den Wechselrichter detektiert wird. Im Falle der Detektion einer mehrphasigen Last muss ein Benutzer dem Wechselrichter nicht mitteilen, dass eine mehrphasige Last angeschlossen ist. Die Detektion einer mehrphasigen Last kann beispielsweise durch Messung einer elektrischen Größe an den zumindest zwei Ausgängen des Wechselrichters erfolgen. Bei einer beispielhaften Ausführungsform wird die mehrphasige Last detektiert, nachdem bereits zumindest ein Ausgang des Wechselrichters deaktiviert wurde, indem der zumindest eine deaktivierte Ausgang hochohmig geschaltet wurde und eine durch die mehrphasigen Last induzierte Spannung an dem zumindest einen deaktivierten Ausgang gemessen wurde. Beispielsweise kann zu diesem Zweck an jedem der zumindest zwei Ausgänge ein Spannungsmesssensor angeordnet sein. Bei einer besonders bevorzugten Ausführungsform der Erfindung ist vorgesehen, dass sämtliche Ausgänge des Wechselrichters deaktiviert werden, wenn eine mehrphasige Last detektiert wird. Wenn keine mehrphasige Last an das lokale Energieversorgungsnetz angeschlossen ist, wird auch keine Spannung in den zumindest einen deaktivierten Ausgang induziert. Eine gemessene Spannung an einem deaktivierten Ausgang indiziert somit das Vorhandensein einer mehrphasigen Last. Hochohmig bedeutet in diesem Zusammenhang vorzugsweise, dass der elektrische Widerstand zwischen dem deaktivierten Ausgang und einem Neutralleiterpotential zumindest 10 kΩ beträgt. Alternativ ist es möglich, einen induzierten Strom an dem zumindest einen deaktivierten Ausgang zu messen, wobei der zumindest eine deaktivierte Ausgang niederohmig geschaltet ist. Zu diesem Zweck kann ein Strommesssensor an jedem der zumindest zwei Ausgänge vorgesehen sein. Ein gemessener Strom an einem deaktivierten Ausgang bedeutet das Vorhandensein einer mehrphasigen Last. Niederohmig bedeutet in diesem Zusammenhang vorzugsweise, dass der elektrische Widerstand zwischen dem deaktivierten Ausgang und einem Neutralleiterpotential höchstens 10 Ω, besonders bevorzugt höchstens 1 Ω, beträgt. Bei einer weiteren Ausführungsform kann das Vorhandensein einer mehrphasigen Last vor dem Deaktivieren zumindest eines Ausgangs detektiert werden, indem im laufenden Betrieb des Wechselrichters beispielsweise die Amplitude und/oder Phasenlage der Ausgangsspannung an einem Ausgang verändert wird. Wenn eine mehrphasige Last an zumindest zwei Ausgängen angeschlossen ist, kann eine entsprechende Veränderung des Ausgangsstromes an einem anderen Ausgang festgestellt werden, was auf eine mehrphasige Last hinweist.

Bei einer Ausführungsform der Erfindung wird also eine mehrphasige Last detektiert, wenn zumindest ein Ausgang des Wechselrichters deaktiviert ist und eine vorzugsweise induzierte Spannung und/oder ein vorzugsweise induzierter Strom an dem zumindest einen deaktivierten Ausgang des Wechselrichters gemessen wird.

Um hohe induzierte Ströme bei mehrphasigen Lasten zu vermeiden, ist es günstig, wenn der Ausgang in Schritt iii) beim Deaktivieren in einen hochohmigen Zustand geschaltet wird. Hochohmig bedeutet in diesem Zusammenhang vorzugsweise, dass der elektrische Widerstand zwischen dem deaktivierten Ausgang und einem Neutralleiterpotential zumindest 10 kΩ beträgt.

Um die elektrischen Verbraucher, die in das elektrische Energieversorgungsnetz angeschlossen sind, mit elektrischer Energie versorgen zu können, ist es günstig, wenn der Wechselrichter von einem elektrischen Energiespeicher und/oder einer elektrischen Energieerzeugungseinrichtung, insbesondere einer Photovoltaikanlage, versorgt wird. Der Wechselrichter kann hierzu mit dem elektrischen Energiespeicher oder der elektrischen Energieerzeugungseinrichtung verbunden sein. Bei dem elektrischen Energiespeicher kann es sich beispielsweise um einen Energiespeicher mit zumindest 1 kWh Speicherkapazität handeln.

Die Erfindung betrifft auch ein Verfahren zur Energieversorgung eines lokalen Energieversorgungsnetzes, insbesondere eines Gebäudeenergieversorgungsnetzes, im Falle einer Unterversorgung durch ein öffentliches Energieversorgungsnetz, insbesondere im Falle eines Stromausfalles, wobei das lokale Energieversorgungsnetz über einen Trennschalter zunächst mit dem öffentlichen Energieversorgungsnetz verbunden ist und ein Wechselrichter an das lokale Gebäudeenergieversorgungsnetz angeschlossen ist, wobei das Verfahren folgende Schritte aufweist:
a) Detektieren der Unterversorgung des lokalen Energieversorgungsnetzes durch das öffentliche Energieversorgungsnetz;
b) Trennen des lokalen Energieversorgungsnetzes von dem öffentlichen Energieversorgungsnetz;
c) Betreiben eines Wechselrichters gemäß einem Verfahren zum Betreiben eines Wechselrichters im Inselbetrieb der oben beschrieben Art.

Eine Unterversorgung des lokalen Energieversorgungsnetzes durch das öffentliche Energieversorgungsnetz kann beispielsweise durch einen Spannungseinbruch und/oder eine Frequenzänderung der Spannung des öffentliche Energieversorgungsnetzes detektiert werden. Das öffentliche Energieversorgungsnetz ist bevorzugt ein öffentliches Nieder- oder Mittelspannungsnetz. Das lokale öffentliche Energieversorgungsnetz ist über zumindest einen Trennschalter mit dem lokalen Energieversorgungsnetz verbunden. Mit Hilfe des zumindest einen Trennschalters kann das lokale Energieversorgungsnetz von dem öffentlichen Energieversorgungsnetz getrennt werden. Insbesondere nachdem das lokale Energieversorgungsnetz von dem öffentlichen Energieversorgungsnetz getrennt wurde, kann ein Wechselrichter gemäß dem oben beschriebenen Verfahren zum Betreiben eines Wechselrichters im Inselbetrieb betrieben werden. Auf diese Weise kann das lokale Energieversorgungsnetz als Inselnetz betrieben werden.

Die Erfindung betrifft auch einen Wechselrichter, vorzugsweise einen Wechselrichter für eine Photovoltaikanlage, mit zumindest zwei Ausgängen zum Anschluss von elektrischen Außenleitern und einer Steuer- und/oder Regelungseinrichtung, wobei die Steuer- und/oder Regelungseinrichtung dazu eingerichtet ist,
insbesondere zueinander phasenversetzte Wechselspannungen an Ausgängen auszugeben, die aktiviert wurden, wobei jedem der zumindest zwei Ausgänge eine Prioritätsstufe zugeordnet ist;
eine Überprüfung hinsichtlich einer elektrischen Überlastung an dem Wechselrichter durchzuführen; und

jenen Ausgang mit der geringsten Prioritätsstufe, an dem eine Wechselspannung ausgegeben wird, durch Beenden der Ausgabe der Wechselspannung an dem Ausgang zu deaktivieren, wenn eine Überlastung des Wechselrichters festgestellt wurde.

Die oben in Zusammenhang mit dem Verfahren zum Betreiben eines Wechselrichters im Inselbetrieb beschriebenen Vorteile, Effekte und Merkmale sind auch auf den erfindungsgemäßen Wechselrichter übertragbar. Der Wechselrichter kann mit Außenleitern eines lokalen Energieversorgungsnetzes verbunden werden. Die Steuer- und/oder Regelungseinrichtung kann beispielsweise durch einen Mikroprozessor gebildet sein. Die Steuer- und/oder Regelungseinrichtung kann in ein Gehäuse des Wechselrichters integriert sein oder als separate Steuer- und/oder Regelungseinrichtung vorliegen. Die Steuer- und/oder Regelungseinrichtung kann darüber hinaus dazu ausgebildet sein, den Wechselrichter derart zu steuern und/oder zu regeln, dass vorzugsweise phasenversetze Wechselspannungen an den Ausgängen ausgegeben werden. An den zumindest zwei Ausgängen können daher Spannungsmesssensoren angeordnet sein. Auch die Spannung eines Gleichspannungszwischenkreises kann mittels eines Spannungsmesssensors erfasst werden. Um den Ausgängen Prioritätsstufen zuzuordnen, kann der Wechselrichter beispielsweise zumindest eine Taste oder ein Bedienfeld, beispielsweise ein Touch-Display, aufweisen. Bevorzugt können die Prioritätsstufen über eine Datenverbindung mit dem Wechselrichter zugeordnet werden. Insbesondere kann dabei vorgesehen sein, dass die Prioritätsstufen über ein User Interface eingestellt werden können. Das User Interface kann beispielsweise in einem Browser oder einer anderen Applikation aufgerufen werden.

Nachfolgend wird die Erfindung anhand von Figuren beschrieben, auf die sie jedoch nicht beschränkt sein soll. Es zeigen:
Fig. 1 einen Wechselrichter, der mit einem lokalen Energieversorgungsnetz verbunden ist, wobei an das lokale Energieversorgungsnetz ausschließlich einphasige Verbraucher verbunden sind;
Fig. 2 einen Wechselrichter, der mit einem lokalen Energieversorgungsnetz verbunden ist, wobei an das lokale Energieversorgungsnetz auch ein mehrphasiger Verbraucher verbunden ist;
Fig. 3 Spannungsverläufe;
Fig. 4 ein Flussdiagramm
Fig. 5A-C zeitliche Verläufe von Ausgangspannungen, Ausgangsströmen und einer Zwischenkreisspannung gemäß einem ersten Beispiel;
Fig. 6A-C zeitliche Verläufe von Ausgangspannungen, Ausgangsströmen und einer Zwischenkreisspannung gemäß einem zweiten Beispiel;
Fig. 7A-C zeitliche Verläufe von Ausgangspannungen, Ausgangsströmen und einer Zwischenkreisspannung gemäß einem dritten Beispiel;
Fig. 8A-C zeitliche Verläufe von Ausgangspannungen, Ausgangsströmen und einer Zwischenkreisspannung gemäß einem vierten Beispiel; und
Fig. 9A-C zeitliche Verläufe von Ausgangspannungen, Ausgangsströmen und einer Zwischenkreisspannung gemäß einem fünften Beispiel.

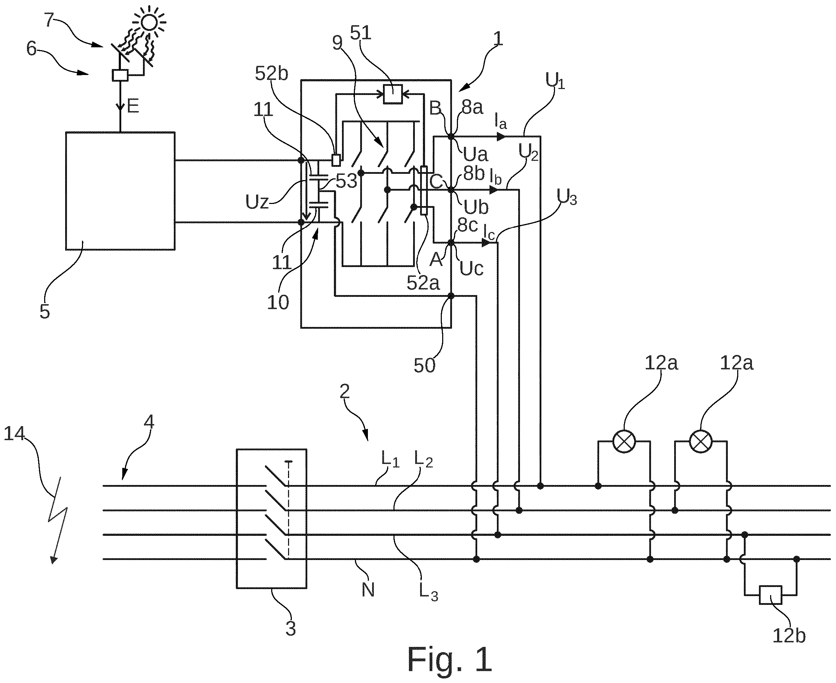

Fig. 1 zeigt einen Wechselrichter 1, der an ein lokales Energieversorgungsnetz 2 mit drei Außenleitern L₁, L₂ und L₃ und einem Neutralleiter N angeschlossen ist. Das lokale Energieversorgungsnetz 2 kann beispielsweise das Energieversorgungsnetz eines Gebäudes (nicht gezeigt), zum Beispiel eines Einfamilienhauses oder eines Bürogebäudes, sein.

Das lokale Energieversorgungsnetz 2 ist über einen mehrphasigen Trennschalter 3 mit einem übergeordneten öffentlichen Energieversorgungsnetz 4 verbunden und wird im Normalbetrieb, d.h. wenn keine Unterversorgung aufgrund eines Stromausfalles vorliegt, über dieses versorgt. Der Wechselrichter 1 kann elektrische Energie E aus einem elektrischen Energiespeicher 5 und/oder einer Energieerzeugungseinrichtung 6, welche beispielsweise als Photovoltaikanlage 7 ausgebildet sein kann, in das lokale Energieversorgungsnetz 2 einspeisen. Zu diesem Zweck weist der Wechselrichter 1 mehrere Ausgänge 8a-c auf, an welche an die Außenleiter L₁, L₂, L₃ des lokalen Energieversorgungsnetzes 2 angeschlossen werden können. An einen Anschluss 50 des Wechselrichters 1 kann der Neutralleiter N angeschlossen werden. Die Ausgänge 8a-c sind jeweils mit elektrischen Schaltern 9, beispielsweise IGBTs (engl. Insulated-Gate Bipolar Transistor), des Wechselrichters 1 verbunden. Die Schalter 9 sind wiederum mit einem Gleichspannungszwischenkreis 10 verbunden, der zumindest einen Kondensator 11 aufweist und an dem eine Zwischenkreisspannung U_{z} anliegt. In der gezeigten Darstellung sind zwei Zwischenkreiskondensatoren 11 vorgesehen, deren Verbindungspunkt 53 mit dem Anschluss 50 verbunden ist. Der Wechselrichter 1 kann bei einer Ausführungsform noch einen oder mehrere Hochsetzsteller (nicht gezeigt) aufweisen. Durch ein Schaltmuster (nicht gezeigt) für die Schalter 9, welches von einer Steuer- und/oder Regelungseinrichtung 51 vorgegeben werden kann, können an den Ausgängen 8a-c Wechselspannungen U₁, U₂, U₃ erzeugt werden, die jeweils um 120° zueinander phasenversetzt sind. Mithilfe einer Messeinrichtung 52a können die Ausgangsspannungen Uₐ, U_{b}, U_{c} an den Ausgängen 8a-c gemessen und für eine Steuerung und/oder Regelung des Wechselrichters 1 durch die Steuer- und/oder Regelungseinrichtung 51 herangezogen werden. Bei einer Ausführungsform der Erfindung können auch elektrische Ströme Iₐ, I_{b}, I_{c} an den Ausgängen 8a-c mithilfe der Messeinrichtung 52a erfasst werden. Mit Hilfe einer weiteren Messeinrichtung 52b kann die Zwischenkreisspannung U_{z} gemessen und ebenfalls der Steuer- und/oder Regelungseinrichtung 51 zur Verfügung gestellt werden. Im Normalbetrieb stimmen die Phasenlagen der an den Ausgängen 8a-c ausgegebene Spannungen U₁, U₂, U₃ mit den jeweiligen Spannungen des übergeordneten Energieversorgungsnetzes 2 überein.

An das lokale Energieversorgungsnetz 2 sind in Fig. 1 einphasige Verbraucher 12a, 12b angeschlossen. In der gezeigten Darstellung sind die Verbraucher 12a, 12b an jeweils unterschiedlichen Außenleitern L₁, L₂, L₃ und an den Neutralleiter N angeschlossen. Bei den gezeigten Verbrauchern 12a, 12b handelt es sich um Lampen 12a und einen Kühlschrank 12b.

Im Falle eines Stromausfalles 14 in dem übergeordneten öffentlichen Energieversorgungsnetz 4 kann das lokale Energieversorgungsnetz 2 von dem Wechselrichter 1 gespeist werden, welcher die elektrische Energie E von dem elektrischen Energiespeicher 5 und/oder der Energieerzeugungseinrichtung 6 bezieht. Der Wechselrichter 1 kann somit im Inselbetrieb betrieben werden, der das lokale Energieversorgungsnetz 2 als Inselnetz versorgt. Bevor der Wechselrichter 1 im Inselbetrieb in das lokale Energieversorgungsnetz 2 einspeist, wird dieses von dem öffentlichen Energieversorgungsnetz 4 mithilfe des Trennschalters 3 getrennt.

Während des Inselbetriebs kann es vorkommen, dass die Verbraucher 12a, 12b mehr elektrische Leistung bzw. mehr elektrische Energie E benötigen, als durch den Wechselrichter 1, den elektrischen Energiespeicher 5 und/oder die Energieerzeugungseinrichtung 6 zur Verfügung gestellt werden kann. In diesem Fall liegt eine elektrische Überlastung vor. Aus dem Stand der Technik ist in einem solchen Fall bekannt, den Wechselrichter 1 vollständig zu deaktivieren, sodass dieser an keinem der Ausgänge 8 eine Wechselspannung U₁, U₂, U₃ ausgibt. Dadurch wird eine Beschädigung bzw. Fehlfunktion der Verbraucher 12a, 12b vermieden. Nachteiligerweise werden dadurch jedoch sämtliche Verbraucher 12a, 12b abgeschaltet.

An ein lokales Energieversorgungsnetz 2 sind jedoch typischerweise Verbraucher 12a, 12b von unterschiedlicher Wichtigkeit angeschlossen. Ein Kühlschrank 12b oder eine Lampe 12a im Keller eines Gebäudes haben im Falle eines Stromausfalles in der Regel eine höhere Relevanz als beispielsweise eine Gartenbeleuchtung, ein Föhn oder eine Spielekonsole.

Gemäß der Erfindung ist daher vorgesehen, dass jedem Ausgang 8a-c für einen Außenleiter L₁, L₂, L₃ eine Prioritätsstufe A, B, C zugeordnet ist und im Falle einer Überlastung des Wechselrichters 1 jener aktive Ausgang mit der geringsten Prioritätsstufe A, B, C, an dem eine Wechselspannung U₁, U₂, U₃ ausgegeben wird, deaktiviert wird. Bevor ein Ausgang 8a-c deaktiviert wird, kann noch der Sollwert der Ausgangsspannungen Uₐ, U_{b}, U_{c} reduziert werden, um die Überlastung zu beseitigen. Wenn dies nichts bewirkt, kann der Ausgang 8a-c mit der geringsten Prioritätsstufe A, B, C deaktiviert werden. Die elektrische Überlastung kann festgestellt werden, indem eine elektrische Größe des Wechselrichters 1, beispielsweise die gemessene Zwischenkreisspannung U_{z}, die gemessenen Ausgangsspannungen Uₐ, U_{b}, U_{c}, die elektrischen Ausgangsströme Iₐ, I_{b}, I_{c} und/oder damit in Relation stehende elektrische Spannungen bzw. Ströme jeweils mit einem entsprechenden Schwellwert verglichen werden. Wenn der Schwellwert, in Abhängigkeit von der Art der elektrischen Größe, unter- oder überschritten wird, kann von einer elektrischen Überlastung ausgegangen werden. Der Schwellwert kann beispielsweise von einem Sollwert für die elektrische Größe abhängig sein. Wenn beispielsweise die gemessene Zwischenkreisspannung U_{z} unterhalb eines Zwischenkreisspannungs-Schwellwerts liegt, der bei einer Ausführungsform 90 % eines Sollwertes betragen kann, kann eine elektrische Überlastung festgestellt werden. Analoges gilt für die Ausgangsspannungen und einen Ausgangsspannungs-Schwellwert. Wenn beispielsweise ein gemessener Ausgangsstrom oberhalb eines Ausgangsstrom-Schwellwerts liegt, der bei einer Ausführungsform 110 % eines Sollwertes betragen kann, kann ebenfalls eine elektrische Überlastung festgestellt werden.

Im gezeigten Beispiel stellt A die höchste Prioritätsstufe und C die niedrigste Prioritätsstufe dar. Verbraucher 12a, die an den Ausgang 8b mit der geringsten Prioritätsstufe C angeschlossen sind, werden demnach im Falle einer elektrischen Überlastung zuerst deaktiviert, wodurch in vielen Fällen auch die elektrische Überlastung beseitigt werden kann. Verbraucher 12a, 12b, die an den Ausgängen 8a, 8c mit den nächst höheren Prioritätsstufen A, B angeschlossen sind, werden somit weiterhin mit elektrischer Energie E versorgt. Bevorzugt sind daher wichtige Verbraucher 12a, 12b, wie etwa Kühlschränke 12b, an einem Außenleiter L₁, L₂, L₃ angeschlossen, der mit einem Ausgang 8a, 8c einer hohen bzw. der höchsten Prioritätsstufe A, B verbunden ist. Unwichtige Verbraucher 12a, 12b, wie etwa Gartenbeleuchtungen oder Umwälzpumpen für Swimmingpools, sind vorzugsweise mit einem Ausgang 8a, 8b einer niedrigen bzw. der niedrigsten Prioritätsstufe B, C verbunden. Wenn nach Deaktivierung des Ausgangs 8b mit der Prioritätsstufe C weiterhin eine elektrische Überlastung vorliegt, können die beschrieben Schritte wiederholt werden und nun jener aktive Ausgang 8a mit der geringsten Prioritätsstufe B, an dem aktuell eine Wechselspannung U₁, U₃ ausgegeben wird, deaktiviert werden. Diese Vorgehensweise kann bis zur Deaktivierung sämtlicher Ausgänge 8a-c des Wechselrichters 1 führen.

Nachdem ein Ausgang 8a-c deaktiviert wurde, kann dieser in Zeitabständen wieder für eine oder mehrere Perioden der Wechselspannung U₁, U₂, U₃ aktiviert werden, um zu überprüfen, ob die Überlastung weiterhin vorliegt. Wenn dies nicht der Fall ist, kann der Ausgang 8a-c mit der höchsten Prioritätsstufe unter den deaktivierten wieder aktiviert werden. Dies kann wiederholt werden, bis alle Ausgänge wieder aktiviert sind.

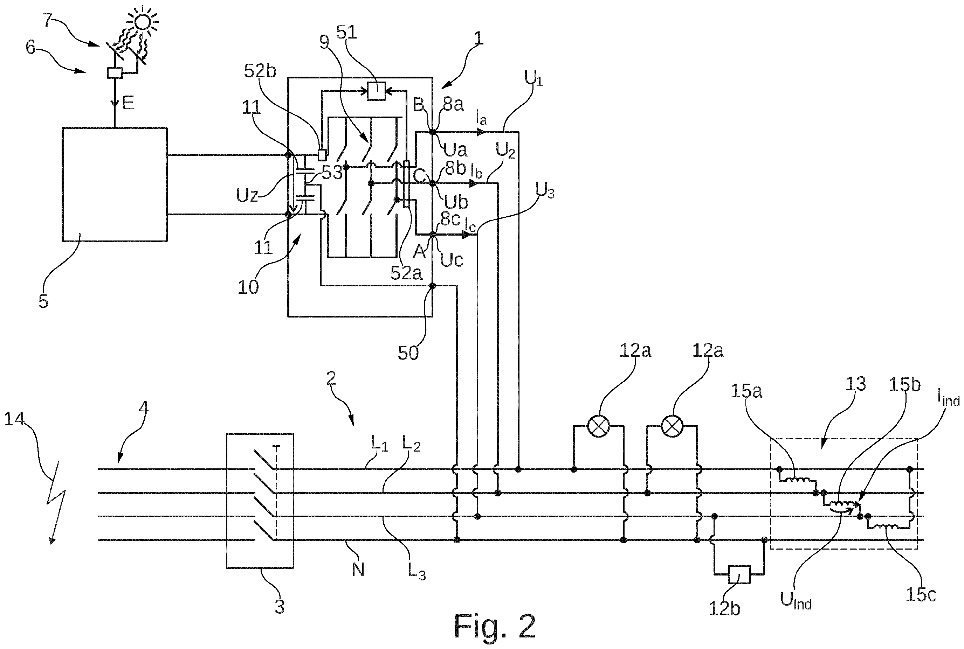

Fig. 2 zeigt ein Schaltbild, bei dem eine mehrphasige Last 13, nachfolgend auch als mehrphasiger Verbraucher 13 bezeichnet, an das lokale Energieversorgungsnetz 2 angeschlossen ist. Bei dem mehrphasigen Verbraucher 13 kann es sich beispielsweise um einen Elektromotor handeln, der eine überwiegend induktive Last darstellt (siehe die Induktivitäten 15a, 15b, 15c). Das Schaltbild der Fig. 2 entspricht mit Ausnahme des zusätzlichen mehrphasigen Verbrauchers 13 dem Schaltbild gemäß Fig. 1, weshalb im Folgenden auf Wiederholungen verzichtet wird. Wenn ein mehrphasiger Verbraucher 13, insbesondere ein dreiphasiger Verbraucher, an das lokale Energieversorgungsnetz 2 angeschlossen ist und einer der Ausgänge 8a-c des Wechselrichters 1 deaktiviert wird, kann es aufgrund der unsymmetrischen Spannungsversorgung zu Beschädigungen kommen. Vorzugsweise ist daher vorgesehen, dass, wenn ein mehrphasiger Verbraucher 13 an das lokale Energieversorgungsnetz 2 angeschlossen ist, bei einer elektrischen Überlastung jene Ausgänge 8a-c, mit denen der mehrphasige Verbraucher 13 verbunden ist, insbesondere alle Ausgänge 8a-c, deaktiviert werden. Zu diesem Zweck kann bei einer Ausführungsform der Erfindung dem Wechselrichter 1 durch manuelle Eingabe das Vorhandensein eines mehrphasigen Verbrauchers 13 mitgeteilt werden. Bei einer weiteren Ausführungsform kann ein mehrphasiger Verbraucher 13 detektiert werden, indem an bereits deaktivierten Ausgängen 8a-c induzierte Spannungen U_{ind} und/oder induzierte Ströme I_{ind} gemessen werden. Die Messung induzierter Spannungen U_{ind} und/oder induzierter Ströme I_{ind} kann mithilfe der Messeinrichtung 52a erfolgen. Insbesondere induzierte Spannungen U_{ind} sind als Spannungen Uₐ, U_{b}, U_{c} an deaktivierten Ausgängen 8a-c feststellbar und weisen auf eine mehrphasige Last 13 hin. Deaktivierte Ausgänge 8a-c können hochohmig (für die Messung induzierter Spannungen U_{ind}), vorzugsweise mit einem Widerstandswert von zumindest 10 kΩ zwischen dem jeweils deaktivierten Ausgang 8a-c und dem Neutralleiterpotential, oder niederohmig (für die Messung induzierter Ströme I_{ind}), vorzugsweise mit einem Widerstandswert von maximal 1 Ω zwischen dem jeweils deaktivierten Ausgang 8a-c und dem Neutralleiterpotential, geschaltet werden.

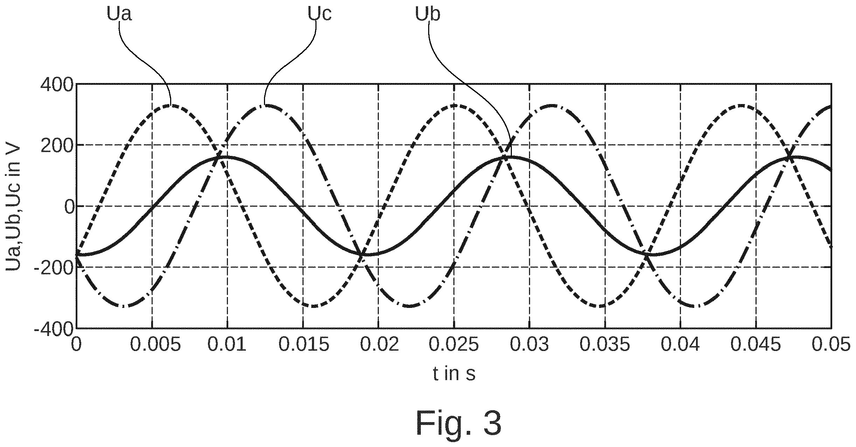

Fig. 3 zeigt einen beispielhaften Verlauf von gemessenen Spannungen Uₐ, U_{b}, U_{c} an den Ausgängen 8a-c, wenn ein mehrphasiger Verbraucher 13 an das lokale Energieversorgungsnetz 2 angeschlossen ist. In der gezeigten Darstellung sind zwei von drei Ausgängen 8 (Ausgänge 8a, 8c) aktiviert und ein Ausgang 8b deaktiviert und hochohmig geschaltet. Erkennbar ist, dass in der mit dem deaktivierten Ausgang 8b verbundenen Induktivität L₂ eine Spannung U_{ind} induziert wird. Aufgrund der Tatsache, dass der Ausgang 8b deaktiviert ist und keine Wechselspannung U₂ ausgibt, kann durch das Messen der Spannung U_{ind} die mehrphasige Last 13 detektiert werden.

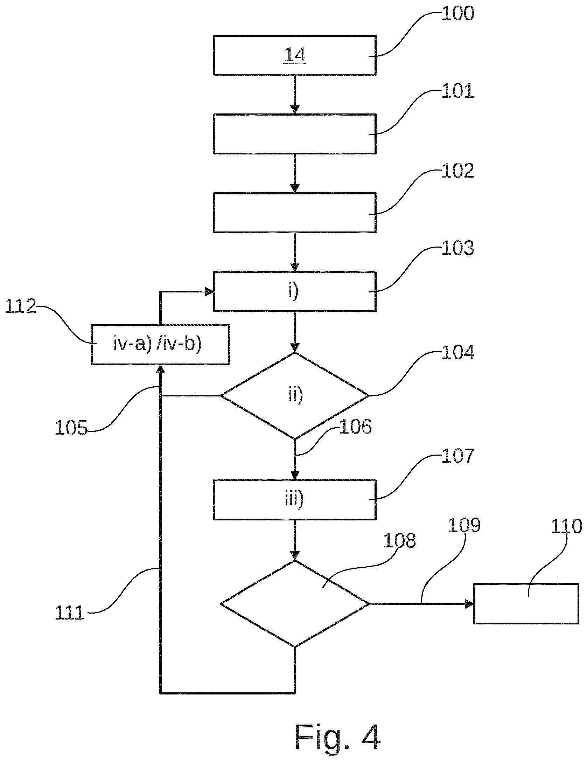

In Fig. 4 ist ein beispielhafter Ablauf des erfindungsgemäßen Verfahrens dargestellt, wie er bei einer Überlastung des Wechselrichters auftreten kann. Natürlich sind auch andere Abfolgen des Verfahrens möglich. Im Falle eines Stromausfalles 14 (Block 100, vgl. Fig. 1 und Fig. 2) wird das lokale Energieversorgungsnetz 2 von dem öffentlichen Energieversorgungsnetz 4 mithilfe des Trennschalters 3 getrennt (Block 101). Anschließend werden sämtliche Ausgänge 8a-c des Wechselrichters 1 aktiviert (Block 102). Jedem Ausgang 8a-c ist eine andere Prioritätsstufe A, B, C zugeordnet. In Schritt i) wird an jedem aktivierten Ausgang 8a-c eine Wechselspannung U₁, U₂, U₃ ausgegeben (Block 103). In Schritt ii) wird überprüft, ob eine elektrische Überlastung vorliegt (Block 104). Falls keine elektrische Überlastung vorliegt, bleiben die Ausgänge 8a-c, die eine Wechselspannung U₁, U₂, U₃ ausgeben, aktiviert (Zweig 105, der zu Block 103 zurückführt). Wenn eine elektrische Überlastung festgestellt wurde (Zweig 106), wird in Schritt iii) jener aktive Ausgang 8a-c mit der geringsten Prioritätsstufe A, B, C, an dem eine Wechselspannung U₁, U₂, U₃ ausgegeben wird, durch Beenden der Ausgabe der Wechselspannung U₁, U₂, U₃ an dem Ausgang 8a-c deaktiviert (Block 107). Bei einer bevorzugten Ausführungsform der Erfindung werden zudem mehrphasige Verbraucher 13 insbesondere durch Messen induzierter Spannungen U_{ind} oder induzierter Ströme I_{ind} an deaktivierten Ausgängen 8a-c erkannt (Block 108). Wenn ein mehrphasiger Verbraucher 13 erkannt wird (Zweig 109), werden vorzugsweise sämtliche Ausgänge 8a-c des Wechselrichters 1 deaktiviert und der Wechselrichter 1 damit abgeschaltet (Block 110). Wenn keine mehrphasige Last 13 erkannt wurde, werden weiterhin Wechselspannungen U₁, U₂, U₃ an den (noch) aktivierten Ausgängen 8a-c ausgegeben (siehe Zweig 111, der in Zweig 105 mündet). Falls die elektrische Überlastung weggefallen ist, weil beispielsweise Verbraucher 12a, 12b von dem lokalen Energieversorgungsnetz 2 entfernt wurden (Schritt iv-a)), oder der Wechselrichter 1 eine höhere elektrische Ausgangsleistung und/oder mehr elektrische Energie E zur Verfügung stellen kann, weil die Energieerzeugungseinrichtung 4 mehr elektrische Leistung bzw. Energie E bereitstellt (Schritt iv-b)), kann in Block 112 der Ausgang 8a-c mit der höchsten Prioritätsstufe A, B, C unter den deaktivierten Ausgängen 8a-c durch Ausgeben einer Wechselspannung U₁, U₂, U₃ an dem besagten Ausgang 8 wieder aktiviert werden (Block 112 bzw. Schritte iv-a) und iv-b)). Bei einer Ausführungsform der Erfindung kann in Block 112 der Ausgang 8a-c mit der höchsten Prioritätsstufe A, B, C unter den deaktivierten Ausgängen 8a-c nach einer bestimmten Zeitdauer, beispielsweise nach 10 Sekunden, wieder aktiviert werden. Wenn daraufhin erneut eine elektrische Überlastung festgestellt wird (Schritt i)), kann in Schritt iii) der besagte Ausgang erneut deaktiviert werden.

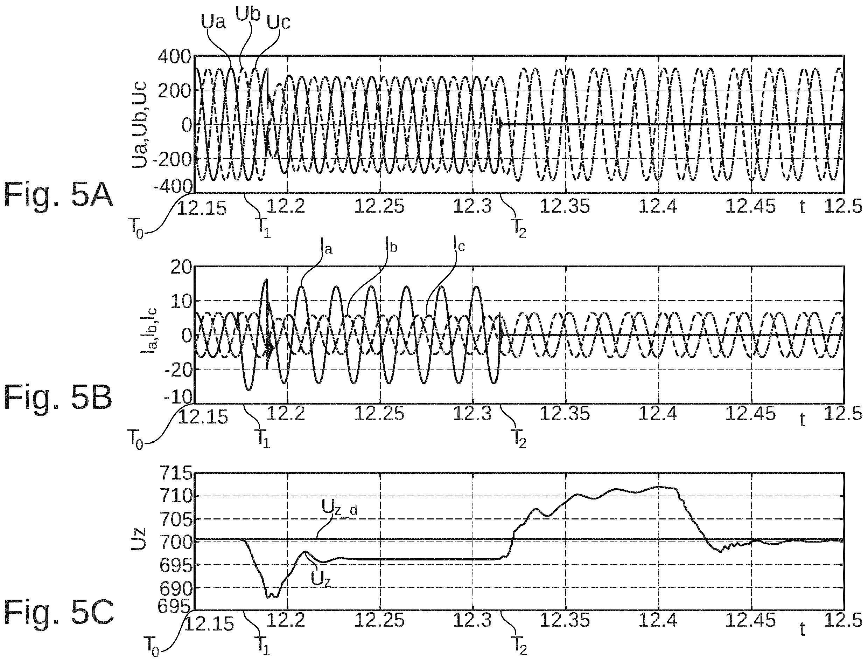

Nachfolgend wird die Deaktivierung von Ausgängen 8a-c aufgrund einer Überlastung anhand von zeitlichen Verläufen der Ausgangsspannungen Uₐ, U_{b}, U_{c}, der Ausgangsströmen Iₐ, I_{b}, I_{c} und der Zwischenkreisspannung U_{z} näher illustriert. Die Abszissen der Fig. 5a-9C beschreiben jeweils eine Zeit t in Sekunden. Die Ordinaten der Fig. 5A, 6A, 7A, 8A und 9A beschreiben jeweils zeitliche Verläufe von Ausgangsspannungen Uₐ, U_{b}, U_{c} in Volt. Die Ordinaten der Fig. 5B, 6B, 7B, 8B und 9B beschreiben jeweils zeitliche Verläufe von Ausgangsströmen Iₐ, I_{b}, I_{c} in Ampere. Die Ordinaten der Fig. 5C, 6C, 7C, 8C und 9C beschreiben jeweils zeitliche Verläufe von Zwischenkreisspannungen U_{z} in Volt.

In Fig. 5A-C ist erkennbar, dass an den Ausgängen 8a-c Wechselspannungen U₁, U₂, U₃ ausgegeben werden. In dem gezeigten Beispiel wird angenommen, dass von dem Wechselrichter 1 3,7 kW Leistung zur Verfügung stehen und abgerufen werden können. Dem Ausgang 8a wurde die niedrigste Priorität C zugewiesen. Dem Ausgang 8b wurde die höchste Priorität A zugewiesen. Dem Ausgang 8c wurde die mittlere Priorität B zugewiesen.

Zum Zeitpunkt T₀ wird eine Leistung von 3kW an den Ausgängen 8a-c durch angeschlossene einphasige Verbraucher 12a, 12b abgerufen. Zum Zeitpunkt T₁ wird ein weiterer großer einphasiger Verbraucher 12a, 12b, beispielsweise ein ohmscher Verbraucher wie eine Herdplatte mit einem Leistungsbedarf von 1,5 kW, an den Ausgang 8a mit der niedrigsten Priorität C geschaltet, sodass insgesamt ein Leistungsbedarf von 4,5 kW vorliegt, der die abrufbare Leistung von 3,7 kW übersteigen würde. Erkennbar ist, dass dadurch eine Überlastung des Wechselrichters 1 entsteht und die Zwischenkreisspannung U_{z} einbricht. Der Strom Iₐ am Ausgang 8a nimmt aufgrund des vorliegenden Leistungsbedarfs von 4,5 kW zu - beispielsweise auf das doppelte (wie dargestellt).

In weiterer Folge kann bei einer Ausführungsform der Erfindung der Sollwert für die Ausgangsspannungen Uₐ, U_{b}, U_{c} an den Ausgängen 8a-c auf 90 % reduziert werden, um auf diese Weise eventuell die Überlastung des Wechselrichters 1 zu beseitigen. Dadurch wird die Ausgangsspannung von 230 V (Effektivwert, entspricht einem Amplitudenwert von ca. 325 V) auf 209 V (Effektivwert, entspricht einem Amplitudenwert von ca. 292 V) reduziert. Allerdings bleibt in der gezeigten Darstellung der Strom Iₐ am Ausgang 8a weiterhin hoch - und auch die Zwischenkreisspannung U_{z} bleibt unterhalb ihres Sollwerts U_{Z_d}. Der zuvor erhöhte Strom Iₐ am Ausgang 8a wird durch die Reduktion des Sollwerts für die Ausgangsspannungen Uₐ, U_{b}, U_{c} im Falle eines ohmschen Verbrauchers um ca. 10 % reduziert. Die abgerufene Leistung reduziert sich in diesem Fall um ca. 19 %.

Diese Reduktion der elektrischen Leistung ist nicht ausreichend, weshalb die Zwischenkreisspannung U_{Z} weiterhin unterhalb ihres Sollwerts U_{Z_d} bleibt. Die Reduktion des Sollwerts für die Ausgangsspannungen Uₐ, U_{b}, U_{c} führt demnach nicht zu dem gewünschten Ergebnis. Das heißt, dass durch diese Maßnahme die Zwischenkreisspannung nicht auf den Sollwert steigt und eine Deaktivierung zumindest eines Ausgangs 8a-c erfolgt.

In weiterer Folge kommt es zum Zeitpunkt T₂ zur Deaktivierung des Ausgangs 8a (Schritt iii des erfindungsgemäßen Verfahrens), da dem Ausgang 8a die niedrigste Priorität C zugewiesen wurde. Durch die Deaktivierung des Ausgangs 8a wird die Überlastung des Wechselrichters 1 beseitigt. Die Ausgänge 8b, 8c können daher weiterhin aktiviert bleiben. Der Sollwert der Spannungen U_{b}, U_{c} an den Ausgängen 8b, 8c kann folglich wieder auf 100 % erhöht werden, wie in Fig. 5A erkennbar ist. Auch die Zwischenkreisspannung U_{Z} steigt wieder auf den Sollwert U_{Z_d} an bzw. pendelt sich auf diesen ein bzw. sich auf den Sollwert stabilisiert.

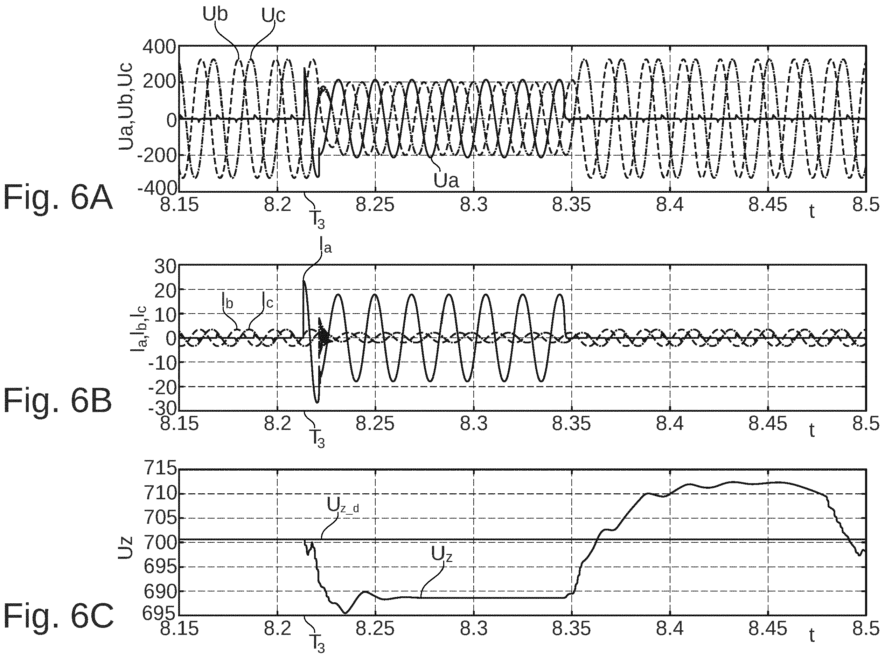

Nach der Deaktivierung des Ausgangs 8a kann bei einer bevorzugten Variante der Erfindung der Ausgang 8a nach Ablauf einer vorgegebenen Zeitdauer von beispielsweise 10 Sekunden erneut aktiviert werden, um zu überprüfen, ob die Überlastung weiterhin vorhanden ist (siehe Fig. 6A-C). Es wäre natürlich auch möglich, dass mehr Leistung von einem elektrischen Energiespeicher 5 und/oder einer Energieerzeugungseinrichtung 6 zur Verfügung gestellt wird. Am Ausgang 8a wird deshalb nach Ablauf der vorgegebenen Zeitdauer erneut eine Ausgangsspannung Uₐ ausgegeben. Um zu überprüfen, ob die Überlastung des Wechselrichters 1 noch vorhanden ist, kann die Ausgangsspannung Uₐ ab dem Zeitpunkt T₃ für eine oder mehrere Perioden an dem Ausgang 8a ausgegeben werden. Bei einer Variante der Erfindung kann, wie oben bereits genauer ausgeführt, erneut eine elektrische Größe des Wechselrichters 1 mit einem entsprechenden Schwellwert verglichen werden, um eine weiterhin vorliegende Überlastung des Wechselrichters 1 oder deren Wegfall festzustellen. Bei einer anderen Variante kann durch Berechnen der elektrischen Leistung festgestellt werden, ob die Überlastung des Wechselrichters 1 weiterhin gegeben ist. Die elektrische Leistung kann insbesondere durch Messen der an den Ausgängen ausgegebenen elektrischen Ströme Iₐ, I_{b}, I_{c} und Multiplizieren mit der jeweiligen elektrischen Spannung Uₐ, U_{b}, U_{c} ermittelt werden. Wenn die abrufbare Leistung - im vorliegenden Fall wie oben erwähnt 3,7 kW - nicht überschritten wird, kann der Ausgang 8a wieder aktiviert werden. Wenn hingegen erneut eine Überlastung festgestellt wird, also die Leistung während des eingeschalteten Ausgangs 8a die abrufbare Leistung übersteigt, wird der Ausgang 8a erneut deaktiviert. Dies ist in Fig. 6A-C dargestellt. Der Ausgang 8a bleibt für den restlichen in Fig. 6A-C dargestellten Zeitraum deaktiviert. Der Ausgang 8a kann jedoch erneut aktiviert werden, um ein weiteres Mal, wie beschrieben, zu überprüfen, ob die Überlastung weiterhin vorhanden ist. Dieser Vorgang kann in regelmäßigen zeitlichen Abständen wiederholt werden, beispielsweise alle 10 Sekunden.

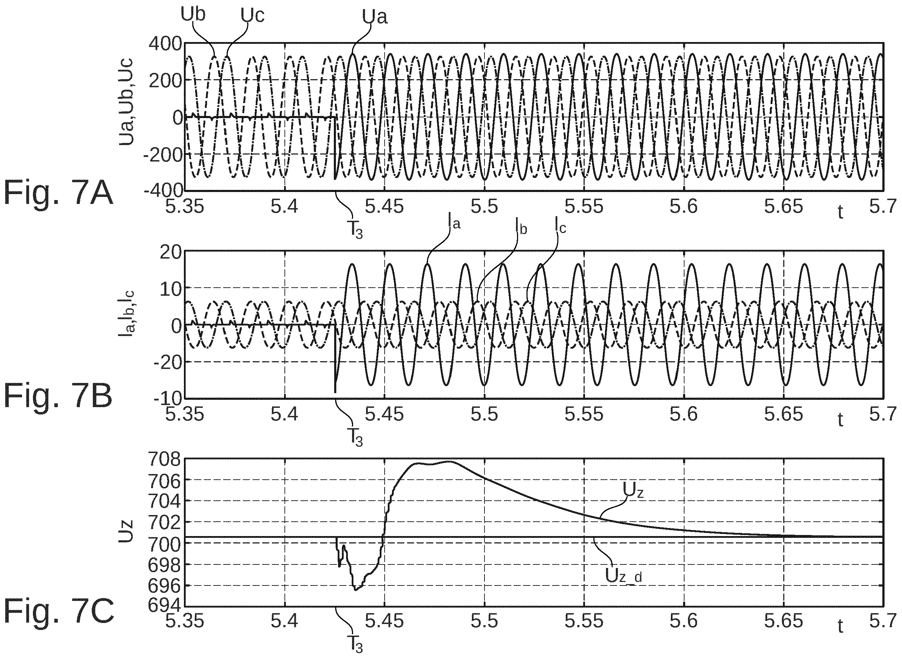

Der Fall, dass die Überlastung nach dem Deaktivieren des Ausgangs 8a weggefallen ist, ist in Fig. 7A-C dargestellt. Erkennbar ist, dass der Ausgang 8a zum Zeitpunkt T₃ aktiviert wird und anschließend aufgrund des Wegfalls der Überlastung aktiviert bleibt. Erkennbar ist, dass der Ausgang 8a zum Zeitpunkt T₃ aktiviert wird und die Ausgangsspannungen Uₐ, U_{b}, U_{c} nicht reduziert werden müssen bzw. die Zwischenkreisspannung U_{Z} nicht unter den für Überlastung festgelegten Grenzwert fällt. Dadurch ist keine Überlastung erkennbar und der Ausgang 8a bleibt aktiviert.

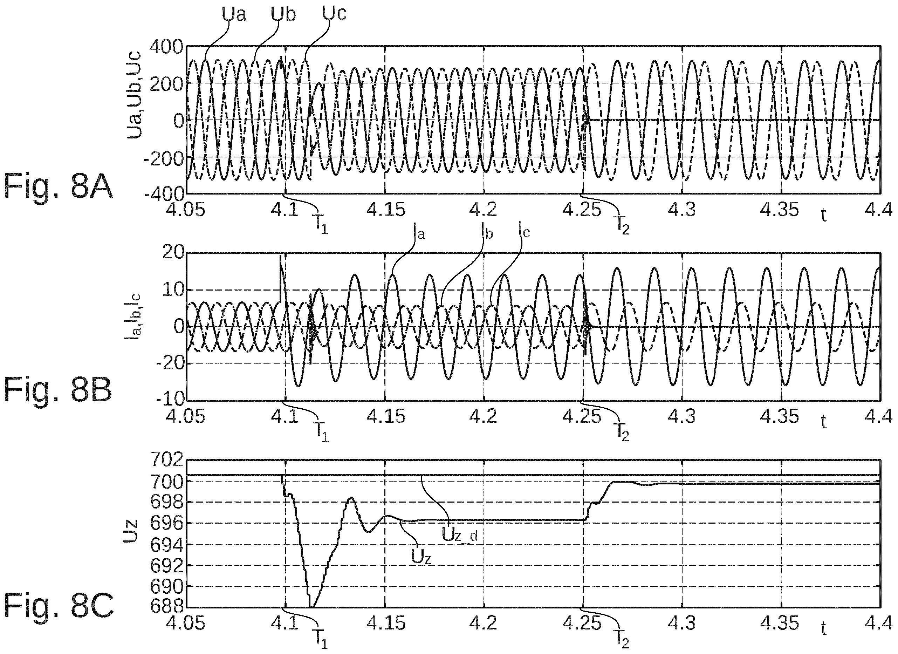

In Fig. 8A-C ist der Fall gezeigt, dass ein Anschluss eines einphasigen Verbrauchers 12a, 12b an einen Ausgang 8a-c zu einer Deaktivierung eines anderen Ausgangs 8a-c bei Überlastung führen kann. In Fig. 8A-C ist dem Ausgang 8a die höchste Priorität A, dem Ausgang 8b die mittlere Priorität B und dem Ausgang 8c die geringste Priorität C zugeordnet. Der Verbraucher 12a, 12b wird zum Zeitpunkt T₁ an den Ausgang 8a angeschlossen, was zum Zeitpunkt T₂ zu einer Deaktivierung des Ausgangs 8c führt, wodurch die Überlastung beseitigt werden kann, weil die benötigte Leistung dadurch unterhalb der abrufbaren Leistung von 3,7 kW liegt.

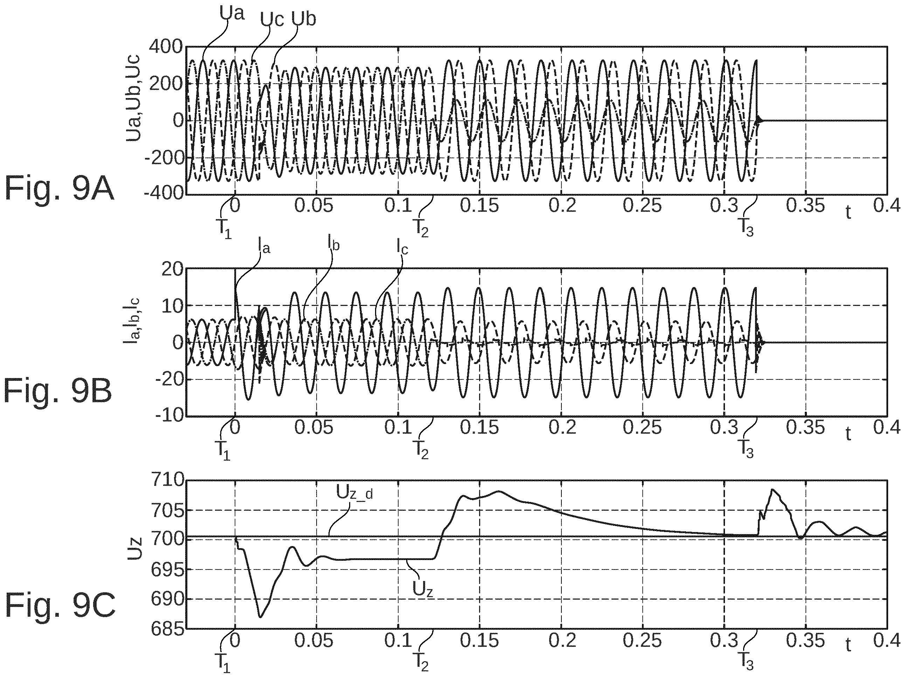

Fig. 9A-C beschreiben den Fall, dass an den Wechselrichter 1 eine mehrphasige Last 13 angeschlossen ist. Zum Zeitpunkt T₁ wird ein zusätzlicher Verbraucher 12a, 12b an den Ausgang 8a angeschlossen. Da eine Reduktion des Sollwerts für die Ausgangsspannung Uₐ, U_{b}, U_{c} die Überlastung nicht beseitigt, wird der Ausgang 8c mit der geringsten Priorität C zum Zeitpunkt T₂ deaktiviert. Der Ausgang 8c wird hochohmig geschaltet. Allerdings zeigt sich, dass eine induzierte Spannung U_{ind} mit einer 50 Hz Komponente und kleinerer Amplitude am Ausgang 8c gemessen werden kann, was ein Hinweis darauf ist, dass eine mehrphasige Last an den Wechselrichter angeschlossen ist. In weiterer Folge werden zum Zeitpunkt T₃ sämtliche Ausgänge 8a-c des Wechselrichters 1 deaktiviert, um Schäden an der mehrphasigen Last 13 zu vermeiden. Die Deaktivierung sämtlicher Ausgänge 8a-c kann gleichzeitig oder nacheinander, insbesondere gemäß der zugewiesenen Prioritätsstufen, erfolgen. Im letzteren Fall kann bereits die Abschaltung nur eines weiteren Ausgangs 8a-c genügen, beispielsweise, wenn nur ein zweiphasiger Verbraucher angeschlossen ist und durch Deaktivieren der beiden Ausgänge 8a-c, mit denen der zweiphasige Verbraucher verbunden ist, die Überlastung des Wechselrichters 1 beseitigt werden kann. Wie oben beschrieben, können nach einer vorgegebenen Zeitdauer erneut einer oder mehrere Ausgänge 8a-c aktiviert werden, um zu überprüfen, ob die Überlastung des Wechselrichters 1 weiterhin vorliegt.

## Patentansprüche

1. Verfahren zum Betreiben eines Wechselrichters (1) im Inselbetrieb, wobei der Wechselrichter (1) zumindest zwei Ausgänge (8a-c) zum Anschluss von elektrischen Außenleitern (L₁, L₂, L₃) besitzt und das Verfahren folgende Schritte aufweist:
i) Ausgeben insbesondere zueinander phasenversetzter Wechselspannungen (U₁, U₂, U₃) an Ausgängen (8a-c), die aktiviert wurden, wobei jedem der zumindest zwei Ausgänge (8a-c) eine Prioritätsstufe (A, B, C) zugeordnet ist;
ii) Überprüfen des Wechselrichters (1) hinsichtlich einer elektrischen Überlastung;
iii) Deaktivieren jenes Ausgangs (8a-c) mit der geringsten Prioritätsstufe (A, B, C), an dem eine Wechselspannung (U₁, U₂, U₃) ausgegeben wird, durch Beenden der Ausgabe der Wechselspannung (U₁, U₂, U₃) an diesem Ausgang (8a-c), wenn eine Überlastung des Wechselrichters (1) festgestellt wurde.

2. Verfahren nach Anspruch 1, **dadurch gekennzeichnet, dass** die Schritte i), ii) und iii) laufend wiederholt werden.

3. Verfahren nach Anspruch 1 oder 2, **dadurch gekennzeichnet, dass** der Wechselrichter (1) hinsichtlich der elektrischen Überlastung überprüft wird, indem
eine elektrische Größe, insbesondere eine elektrische Spannung oder ein elektrischer Strom, des Wechselrichters (1) erfasst wird und
die elektrische Größe mit einem Schwellwert verglichen wird, und eine Überlastung festgestellt wird, wenn die elektrische Größe den Schwellwert unter- oder überschreitet.

4. Verfahren nach Anspruch 3, **dadurch gekennzeichnet, dass** die elektrische Größe
ein elektrischer Strom, insbesondere ein Ausgangsstrom an einem der Ausgänge (8a-c),
eine mit dem elektrischen Strom in Verbindung stehende Größe,
eine elektrische Zwischenkreisspannung (U_{Z}) eines Zwischenkreises (10) des Wechselrichters (1),
eine elektrische Ausgangsspannung (Uₐ, U_{b}, U_{c}) zumindest eines der Ausgänge (8a-c) des Wechselrichters (1) oder
eine mit der Zwischenkreisspannung (U_{Z}) und/oder der Ausgangsspannung in Verbindung stehende Größe
ist.

5. Verfahren nach einem der Ansprüche 1 bis 4, **dadurch gekennzeichnet, dass** eine Zuordnung der Prioritätsstufen (A, B, C) zu den zumindest zwei Ausgängen einstellbar ist.

6. Verfahren nach einem der Ansprüche 1 bis 5, **dadurch gekennzeichnet, dass** jedem der zumindest zwei Ausgänge (8a-c) des Wechselrichters (1) eine eindeutige Prioritätsstufe (A, B, C), die sich von den Prioritätsstufen (A, B, C) der anderen Ausgänge (8a-c) unterscheidet, zugeordnet ist.

7. Verfahren nach einem der Ansprüche 1 bis 6, **dadurch gekennzeichnet, dass** der Wechselrichter (1) an ein lokales Energieversorgungsnetz (2), insbesondere an ein Gebäudeenergieversorgungsnetz, angeschlossen ist und das lokale Energieversorgungsnetz (2) versorgt.

8. Verfahren nach einem der Ansprüche 1 bis 7, **gekennzeichnet durch** den Schritt
iv-a) Erneutes Aktivieren des Ausgangs (8a-c) mit der höchsten Prioritätsstufe (A, B, C) unter den deaktivierten Ausgängen (A, B, C), wenn die Überlastung, die zur Deaktivierung des besagten Ausgangs (8a-c) geführt hat, nicht mehr vorliegt.

9. Verfahren nach einem der Ansprüche 1 bis 8, **gekennzeichnet durch** den Schritt
iv-b) Erneutes Aktivieren des Ausgangs (8a-c) mit der höchsten Prioritätsstufe (A, B, c) unter den deaktivierten Ausgängen (8a-c), wenn durch den Wechselrichter (1) eine höhere elektrische Ausgangsleistung und/oder mehr elektrische Energie (E) zur Verfügung stellen kann, als dies bei Deaktivierung des besagten Ausgangs (8a-c) der Fall war.

10. Verfahren nach einem der Ansprüche 1 bis 9, **dadurch gekennzeichnet, dass**, wenn eine mehrphasige Last (13) mit zumindest zwei Ausgängen (8a-c) des Wechselrichters (1) elektrisch verbunden ist, sämtliche Ausgänge (8a-c) des Wechselrichters, an denen die mehrphasige Last (13) angeschlossen ist, insbesondere nach Feststellung einer elektrischen Überlastung deaktiviert werden, vorzugsweise wobei die mehrphasige Last (13) detektiert wird.

11. Verfahren nach Anspruch 10, **dadurch gekennzeichnet, dass** eine mehrphasige Last (13) detektiert wird, wenn zumindest ein Ausgang (8a-c) des Wechselrichters (1) deaktiviert ist und eine vorzugsweise induzierte Spannung (U_{ind}) und/oder ein vorzugsweise induzierter Strom (I_{ind}) an dem zumindest einen deaktivierten Ausgang (8a-c) des Wechselrichters (1) gemessen wird.

12. Verfahren nach einem der Ansprüche 1 bis 11, **dadurch gekennzeichnet, dass** der Ausgang (8a-c) in Schritt iii) beim Deaktivieren in einen hochohmigen Zustand geschaltet wird.

13. Verfahren nach einem der Ansprüche 1 bis 12, **dadurch gekennzeichnet, dass** der Wechselrichter (1) von einem elektrischen Energiespeicher (5) und/oder einer elektrischen Energieerzeugungseinrichtung (6), insbesondere einer Photovoltaikanlage (7), versorgt wird.

14. Verfahren zur Energieversorgung eines lokalen Energieversorgungsnetzes (2), insbesondere eines Gebäudeenergieversorgungsnetzes, im Falle einer Unterversorgung durch ein öffentliches Energieversorgungsnetz (4), insbesondere im Falle eines Stromausfalles (14), wobei das lokale Energieversorgungsnetz (2) mit dem öffentlichen Energieversorgungsnetz (4) über einen Trennschalter (3) zunächst verbunden ist und ein Wechselrichter (1) an das lokale Gebäudeenergieversorgungsnetz (2) angeschlossen ist, wobei das Verfahren folgende Schritte aufweist:
a) Detektieren der Unterversorgung des lokalen Energieversorgungsnetzes (2) durch das öffentliche Energieversorgungsnetz (4) ;
b) Trennen des lokalen Energieversorgungsnetzes (2) von dem öffentlichen Energieversorgungsnetz (4);
c) Betreiben eines Wechselrichters (1) gemäß einem Verfahren nach den Ansprüchen 1 bis 13.

15. Wechselrichter (1), vorzugsweise Wechselrichter für eine Photovoltaikanlage (7), mit zumindest zwei Ausgängen (8a-c) zum Anschluss von elektrischen Außenleitern (L₁, L₂, L₃) und einer Steuer- und/oder Regelungseinrichtung (51), **dadurch gekennzeichnet, dass** die Steuer- und/oder Regelungseinrichtung (51) dazu eingerichtet ist,
insbesondere zueinander phasenversetzte Wechselspannungen (U₁, U₂, U₃) an Ausgängen (8a-c) auszugeben, die aktiviert wurden, wobei jedem der zumindest zwei Ausgänge (8a-c) eine Prioritätsstufe (A, B, C) zugeordnet ist;
eine Überprüfung hinsichtlich einer elektrischen Überlastung an dem Wechselrichter durchzuführen; und
jenen Ausgang (8a-c) mit der geringsten Prioritätsstufe, an dem eine Wechselspannung (U₁, U₂, U₃) ausgegeben wird, durch Beenden der Ausgabe der Wechselspannung (U₁, U₂, U₃) an dem Ausgang (8a-c) zu deaktivieren, wenn eine Überlastung des Wechselrichters (1) festgestellt wurde.
